(19) Europäisches Patentamt
European Patent Office
Office européen des brevets

(11) **EP 4 718 308 A1**

(12) # EUROPEAN PATENT APPLICATION

(43) Date of publication:
**01.04.2026 Bulletin 2026/14**

(21) Application number: **24203670.5**

(22) Date of filing: **30.09.2024**

(51) International Patent Classification (IPC):
***G06F 30/00*** *(2020.01)* ***G06F 17/11*** *(2006.01)*
***G06F 30/17*** *(2020.01)* ***G06F 30/20*** *(2020.01)*
***G06N 5/01*** *(2023.01)*

(52) Cooperative Patent Classification (CPC):
**G06F 30/17; G06F 17/11; G06F 30/00; G06F 30/20; G06N 5/01;** G06F 2111/04; G06N 10/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
- **B V, Krishna Prasad**
**560050 Bangalore (IN)**
- **KASHYAP, Aman**
**800025 Patna, Bihar (IN)**
- **RAMANATH, Vinay**
**560070 Bengaluru, Karnataka (IN)**
- **JAIN, Naman**
**136118 Kurukshetra, Haryana (IN)**
- **NAGAR, Deepak**
**110030 New Delhi (IN)**

(74) Representative: **HKW Intellectual Property PartG mbB**
**Theresienhöhe 12**
**80339 München (DE)**

(54) **SYSTEM AND METHOD FOR OPTIMIZING ENGINEERING DESIGNS**

(57) A system and method for optimizing engineering designs is disclosed herein. The method includes receiving, by a processor (104), a request for optimizing one or more design parameters associated with an engineering design from an input device (112), wherein the request comprises at least one inequality constraint for the one or more design parameters. Further, a function for determining an improvised Ising formulation based on the one or more design parameters is invoked, wherein the Ising formulation comprises an interaction matrix and a bias vector. The interaction matrix and the bias vector from the improvised Ising formulation is used to perform optimization of the one or more design parameters. Further, n output indicative of optimized values of the one or more design parameters is generated based on the optimization performed, on an output device (114).

FIG 1

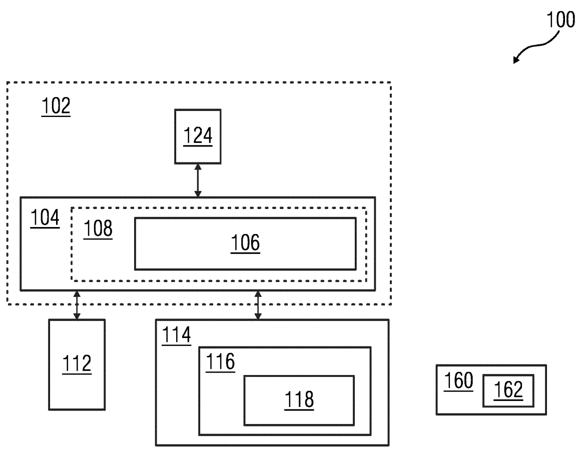


EP 4 718 308 A1

## Description

### Technical field

The present invention relates to engineering design optimization, and in particular relates to a system and method for optimizing engineering designs using quantum-inspired optimization.

### Background

Optimization solvers have witnessed significant advancements in recent years, particularly in their ability to tackle complex problems involving variables operating in continuous design spaces. These solvers have proven invaluable in optimizing a wide range of real-world scenarios, from supply chain management to engineering design. However, when it comes to combinatorial and mixed integer (non) linear programming problems, the landscape remains challenging, and the current toolset is limited and expensive. We could find such classes of problems in large scale scheduling and operation research domains. These problems involve discrete, often binary decisions, and their solution space grows exponentially with problem size. Despite ongoing efforts, optimization solvers are still grappling with the formidable complexity of such cases. This ongoing limitation underscores the enduring importance of algorithmic research, as well as the need for innovative approaches to address the most intricate and intractable optimization challenges.

Combinatorial problems, or discrete optimization problems, represent a class of mathematical problems that deals with finite set of objects and seek to find an optimal arrangement or selection of these objects according to a predefined objective function, subject to specific constraints. The solution space of such problems is huge, making it computationally expensive in time and memory. Genetic Algorithms, Particle Swarm, Simulated Annealing and Tabu Search are used to find good solutions for combinatorial problems. However, metaheuristic algorithms may struggle to maintain their efficacy on large-scale problems since they require significant computational resources in terms of time and memory.

### Summary

Variously disclosed embodiments comprise methods and systems that may be used for optimizing an engineering design.

According to a first aspect of the invention, a computer-implemented method for optimizing engineering designs is disclosed. The method includes receiving a request for optimizing one or more design parameters associated with an engineering design from an input device (112), wherein the request comprises at least one inequality constraint for the one or more design parameters; invoking a function for determining an improvised Ising formulation based on the one or more design parameters, wherein the Ising formulation comprises an interaction matrix and a bias vector; using the interaction matrix and the bias vector from the improvised Ising formulation to perform optimization of the one or more design parameters; and generating an output indicative of optimized values of the one or more design parameters based on the optimization performed, on an output device. In an embodiment, the bias vector is based on one or more binary variable spins associated with the at least one inequality constraint. In an embodiment, the optimization is performed using one of simulated bifurcation algorithm, quantum approximate optimization algorithm, and simulated annealing. In an embodiment, the method further includes generating a design file based on the optimized design parameters. In another embodiment, the method further includes providing the generated design file to a manufacturing equipment, for manufacturing of the product based on the optimized design parameters.

According to a second aspect of the invention, a system may be arranged and configured to execute the steps of the computer-implemented method according to the first aspect of the invention.

According to a third aspect of the invention, a computer program product may comprise computer program code which, when executed by the system according to the second aspect of the invention, causes the system to carry out the method according to the first aspect of the invention.

According to a fourth aspect of the invention, a computer-readable medium may comprise the computer program product according to the third aspect of the invention. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure.

Also, before undertaking the detailed description below, various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

Brief description of figures

FIG 1 illustrates a functional block diagram of an example system or data processing system that facilitates... in accordance with an embodiment of the present invention;

FIG 2A shows a graph 200 comparing solution sets generated using Simulated Bifurcation technique based on the Ising model formulated with bias vector based on the inequality constraint, to a benchmark solution set and genetic algorithm-generated solution set;

FIG 2B shows a relationship between Ising energy of the solutions with variations in cost function in the context of distinguising between feasible and infeasible solutions;

FIG 3 shows a flowchart of a method for optimizing engineering designs, in accordance with an embodiment of the present invention; and

FIG 4 illustrates a block diagram of a data processing system, in accordance with an embodiment of the present invention.

Detailed description

Various technologies that pertain to systems and methods for optimizing engineering designs will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

FIG 1 illustrates a functional block diagram of an example system or data processing system 100 that facilitates optimization of a engineering design, in accordance with an embodiment of the present invention.

The system 100 may include a design optimization platform 102 including at least one processor 104 that is configured to execute at least one design optimization module 106 from a memory 108 accessed by the processor 104. Herein, the design optimization platform 102 may include functionalities of receiving, by a processor 104, a request for optimizing one or more design parameters associated with an engineering design from an input device 112, wherein the request comprises at least one inequality constraint for the one or more design parameters; invoking a function for determining an improvised Ising formulation based on the one or more design parameters, wherein the Ising formulation comprises an interaction matrix and a bias vector, wherein the bias vector is based on one or more binary variable spins associated with the at least one inequality constraint; using the interaction matrix and the bias vector from the improvised Ising formulation to perform optimization of the one or more design parameters; and generating an output indicative of optimized values of the one or more design parameters based on the optimization performed, on an output device 114.

The design optimization module 106 may be configured (i.e., programmed) to cause the processor 104 to carry out various acts and functions described herein. For example, the described design optimization module 106 may include and/or correspond to one or more components of the design optimization platform 102 that is configured to generate optimized engineering designs in response to requests received from the input device.

By way of example, the design optimization platform 102 may be cloud-based, internet-based and/or be operated by a provider providing design tools. The user may be located close to the design optimization platform 102 or remote to the design optimization platform 102, e.g., using a workstation for connecting to the design optimization platform 102, e.g., via the internet, wherein the workstation may include an input device 112 and an output device 114. Non-limiting examples of the input device 112 include joysticks, wearable devices (such as data gloves, head mounted displays with cameras, electrodes, microphone, mouse, keyboard, pointer, touch screen, touch pad, drawing tablet, trackball, buttons, keypad, game controller, gamepad, camera, microphone, scanners, and motion sensing devices that capture motion gestures.In some examples, the design optimization platform 102 may be installed and run on a user's device, such as a computer, laptop, pad, on-premise computing facility, or the like.

Examples of product systems that may be adapted to include the design optimization features described herein may include tools such as HEEDS of Siemens, Germany. However, it should be appreciated that the systems and methods described herein may be used in other product systems (e.g., product lifecycle management (PLM), product data management (PDM)) and/or any other type of system that is used for generating engineering designs.

To enable the enhanced optimization of engineering designs, the described product system or system 100 may be communicatively coupled to at least one input device 112 and at least one output device 114. The described processor 104 may be configured to generate a graphical user interface (GUI) 116 through the output device 114. Such a GUI 116 may include GUI elements such as buttons, links, search boxes, lists, text boxes, images, scroll bars usable by a user to provide inputs corresponding to engineering design problems through the input device 112 required to manipulate the avatar. By way of example, the GUI 116 may include a design UI 118 to facilitate a human operator to provide requests for optimizing engineering designs, and for accessing design files generated based on the optimized engineering designs. The system 100 further includes a database 124 for storing solution sets.

In an embodiment, the design optimization module 106 and/or the processor 104 is configured to receive a request for optimizing an engineering design. The request comprises at least an objective function based on one or more design parameters, and at least one inequality constraint associated with the engineering design.

The design optimization module 106 and/or the processor 104 is further configured to invoke a function to determine an improvised Ising formulation based on the one or more design parameters, wherein the Ising formulation comprises an interaction matrix and a bias vector. The interaction matrix is generated based on the objective function and penalty defined for the engineering design. The present invention may be explained in detail with reference to a nondeterministic polynomial (NP) such as the Knapsack problem. The Knapsack problem is based on the assumptions that there are N objects each of weight $w_\alpha$ and cost $c_\alpha$, where $\alpha$ is an index label for the object and the knapsack that can carry a weight W. If $x_\alpha$ is a binary variable indicating presence (+1) or absence (-1) of an object $\alpha$ in the knapsack, the total weight in the knapsack is:

$$W = \sum_{\alpha=1}^{N} w_\alpha x_\alpha \quad (1)$$

The total cost is given by:

$$C = \sum_{\alpha=1}^{N} c_\alpha x_\alpha \quad (2)$$

The cost *C* must be maximized subject to the constraint *W*≤ W, i.e.,

$$\mathrm{W} - \sum_{\alpha=1}^{N} w_\alpha x_\alpha \geq 0 \quad (3)$$

In its basic form, the Hamiltonian of the Ising model can be expressed as:

$$H = -\sum J_{ij} * x_i * x_j \quad (4)$$

Here, H represents the energy of the system, $J_{ij}$ denotes the interaction strengths between spins at lattice sites i and j, and $X_i$ and $X_j$ are spin variables, which take values +1 or -1. The challenge is to find the spin configuration that minimizes Ising energy.

The design optimization module 106 and/or the processor 104 is further configured to use the interaction matrix and the bias vector from the improvised Ising formulation to perform optimization of the one or more design parameters. In particular, the Ising energy equation is derived as below:

$$\mathrm{E} = -\sum\sum \boldsymbol{J_{ij}} * x_i * x_j - \sum \boldsymbol{h_i} * x_i \quad (5)$$

$$-C_0\left(\sum\sum c_i * c_j * x_i * x_j\right) + \left(-\sum w_i * x_i + \mathrm{W}\right) * Penalty \quad (6)$$

where, E is the Ising energy, and equation (6) is an objective function that must be minimized in order to keep the solution as close to the optima as possible by keeping the Ising energy low.

$J_{ij}$ is the interaction matrix $h_i$ is the bias vector

Penalty is a parameter required for the formulation

Herein, the bias vector is based on the spin variables alone. In particular, the present invention eliminates the need for intriducing auxiliary spin variables for the inequality constraints. In the present example, no auxiliary spins are introduced for the inequality constraint of (3)

Based on the above improvised Ising formulation, optimization of the design parameter is performed. In an embodiment, the optimization is performed using simulated bifurcation algorithm. Other optimization techniques that take Ising model as input may also be used to perform the optimization. Non-limiting examples of such other optimization techniques include, but are not limited to, simulated annealing and quantum approximate optimization algorithm. The functioning of the above-mentioned optimization algorithms is known to a person skilled in the art, and hence no additional explanation is provided thereto.

The design optimization module 106 and/or the processor 104 is further configured to generate an output indicative of optimized values of the one or more design parameters based on the optimization performed, on the output device 114. FIG 2A shows a graph 200 comparing solution sets generated for object counts from 0 to 200, using Simulated Bifurcation technique based on the Ising model formulated with bias vector based on the inequality constraint, to a benchmark solution set and genetic algorithm-generated solution set. FIG 2B shows a relationship between Ising energy of the solutions with variations in cost function in the context of distinguising between feasible and infeasible solutions. The graph shows that the Ising Energy converges to a definite value after a bifurcation, and the Knapsack problem's cost function follows a similar trend.

Advantageously, infeasible solutions are no longer encountered after the bifurcation, thereby providing a feasible solution close to optima.

In an embodiment, the design customization module 106 and/or the processor 104 is further configured to generate a design file based on the one or more optimized design parameters, on the output device 114. The design file may be generated in the form of Computer-Aided Design files such as formats such as, but not limited to, .dwg, .dxf, STEP, .qif, .jt, and .prt. In a further embodiment, the design customization module 106 and/or the processor 104 is further configured to provide the generated design file to a manufacturing equipment, for manufacturing of the product. For example, the design file is provided to a 3D printer for printing. In an implementation, the optimized design parameters are also outputted in the form of text.

As mentioned above, the design customization platform 102 may comprise the above-described functionalities and may provide an interactive user interface of the design customization platform 102 which supports optimization of engineering designs.

Further, a computer-readable medium 160 which may comprise a computer program product 162 is shown in FIG 1, wherein the computer program product 162 may be encoded with executable instructions, that when executed, cause the system 100 or and/or the design customization platform 102 to carry out the described method.

FIG 3 shows a flowchart of a method 300 for customizing a product design, in accordance with an embodiment of the present invention. The method may start at 305 and the methodology may comprise several method steps carried out through operation of at least one processor similar to the processor 104.

At step 310, a request for optimizing one or more design parameters associated with an engineering design is received from an input device. The request comprises at least one inequality constraint for the one or more design parameters.

At step 315, a function for determining an improvised Ising formulation based on the one or more design parameters is invoked. The Ising formulation comprises an interaction matrix and a bias vector, wherein the bias vector is based on one or more binary variable spins associated with the at least one inequality constraint.

At step 320, the interaction matrix and the bias vector from the improvised Ising formulation are used to perform optimization of the one or more design parameters.

At step 325, an output indicative of optimized values of the one or more design parameters is generated based on the optimization performed.

At step 330, the methodology may end.

It should further be appreciated that the methodology 300 may comprise other acts and features discussed previously with respect to the computer-implemented method of optimizing engineering designs.

For example, the method may further comprise the act of generating a design file based on the optimized design parameters. The method may also comprise the act of providing the providing the generated design file to a manufacturing equipment, for manufacturing of the product based on the optimized design parameters.

As discussed previously, acts associated with these methodologies (other than any described manual acts such as an act of manually making a selection through the input device 112) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, JavaScript, Python, C, C#, C++ or any other software tool capable of producing components and graphical user interfaces configured to carry out the acts and features described herein.

The suggested approach offers several advantages over other approaches. For example, the present invention enables handling of combinatorial problems by effectively reducing computational complexity and enhancing solution feasibility through an innovative Ising formulation. In particular, the present invention uses a quantum-inspired algorithm by eliminating the need for ancillary spins for modeling inequality constraints, thereby reducing computational complexity and improving solution feasibility. By leveraging optimization algorithms that take Ising models as inputs, the present invention constructs the interaction matrix using cost values and satisfies constraints via a bias vector, significantly enhancing the probability of achieving feasible solutions. This shows potential for large-scale problems with substantial computational performance improvements and cost savings in industrial applications.

FIG 3 illustrates a block diagram of a data processing system 1000 (also referred to as a system) in which an embodiment can be implemented, for example, as a portion of a product system, and/or other system operatively configured by software or otherwise to perform the processes as described herein. The data processing system 1000 may include, for example, the design customization platform 102 and/or the system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, Wi-Fi controllers, cellular controllers) operative to connect to a local area network (LAN), Wide Area Network (WAN), a cellular network, and/or other wired or wireless networks 1014 or communication equipment.

Further components connected to various buses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., flat screens, head mounted displays, printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input device and a display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machine-readable storage medium. Examples include non-volatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system 1000 in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data pro-cessing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system net-work or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system 1000 may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor 104 described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein, the term 'processor' corresponds to any electronic device that is configured via hardware circuits, software, and/or firmware to process data. For example, processors described herein may correspond to one or more (or a combination) microprocessors, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system 1000 as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

Although an exemplary embodiment of the present disclosure has been described in detail, those skilled in the art will understand that various changes, substitutions, variations, and improvements disclosed herein may be made without departing from the scope of the disclosure in its broadest form.

None of the description in the present patent document should be read as implying that any particular element, step, act, or function is an essential element, which must be included in the claim scope: the scope of patented subject matter is defined only by the allowed claims.

List of Reference

| | |
|---|---|
| 100 | system |
| 102 | design optimization platform |
| 104 | at least one processor |
| 106 | design optimization module |
| 108 | memory |
| 112 | at least one input device |
| 114 | at least one output device |
| 116 | graphical user interface |
| 118 | design UI |
| 124 | database |
| 1000 | data processing system |
| 1002 | processor |
| 1004 | bridges/controllers/buses |
| 1006 | memory |
| 1008 | graphics controller |
| 1010 | display devices |
| 1012 | communication controllers |
| 1014 | networks |
| 1016 | I/O controllers |
| 1018 | input devices |
| 1020 | output devices |
| 1022 | peripheral hardware |
| 1024 | storage controllers |
| 1026 | storage device |
| 1028 | operating system |
| 1030 | software/firmware |
| 1032 | data stores |
| 1034 | server |

## Claims

1. A computer-implemented method comprising:

   receiving, by a processor (104), a request for optimizing one or more design parameters associated with an engineering design from an input device (112), wherein the request comprises at least one inequality constraint for the one or more design parameters;
   invoking a function for determining an improvised Ising formulation based on the one or more design parameters, wherein the Ising formulation comprises an interaction matrix and a bias vector;
   using the interaction matrix and the bias vector from the improvised Ising formulation to perform optimization of the one or more design parameters; and
   generating an output indicative of optimized values of the one or more design parameters based on the optimization performed, on an output device (114).

2. The method according to claim 1, wherein the bias vector is based on one or more binary variable spins associated with the at least one inequality constraint.

3. The method according to claim 1, wherein the optimization is performed using one of simulated bifurcation algorithm, quantum approximate optimization algorithm, and simulated annealing.

4. The method according to any of the claims 1 to 3, further comprising:
   generating a design file based on the optimized design parameters.

5. The method according to claims 1 and 4, further comprising:
   providing the generated design file to a manufacturing equipment, for manufacturing of the product based on the optimized design parameters.

6. A system (100) arranged and configured to execute the steps of the computer-implemented method according to any one of the preceding claims 1 to 5.

7. A computer program product (162), comprising computer program code which, when executed by a system (100), causes the system (100) to carry out the method of one of the claims 1 to 5.

8. A computer-readable medium (160) comprising a computer program product (162) comprising computer program code which, when executed by a system (100), cause the system (100) to carry out the method of one of the claims 1 to 5.

FIG 1

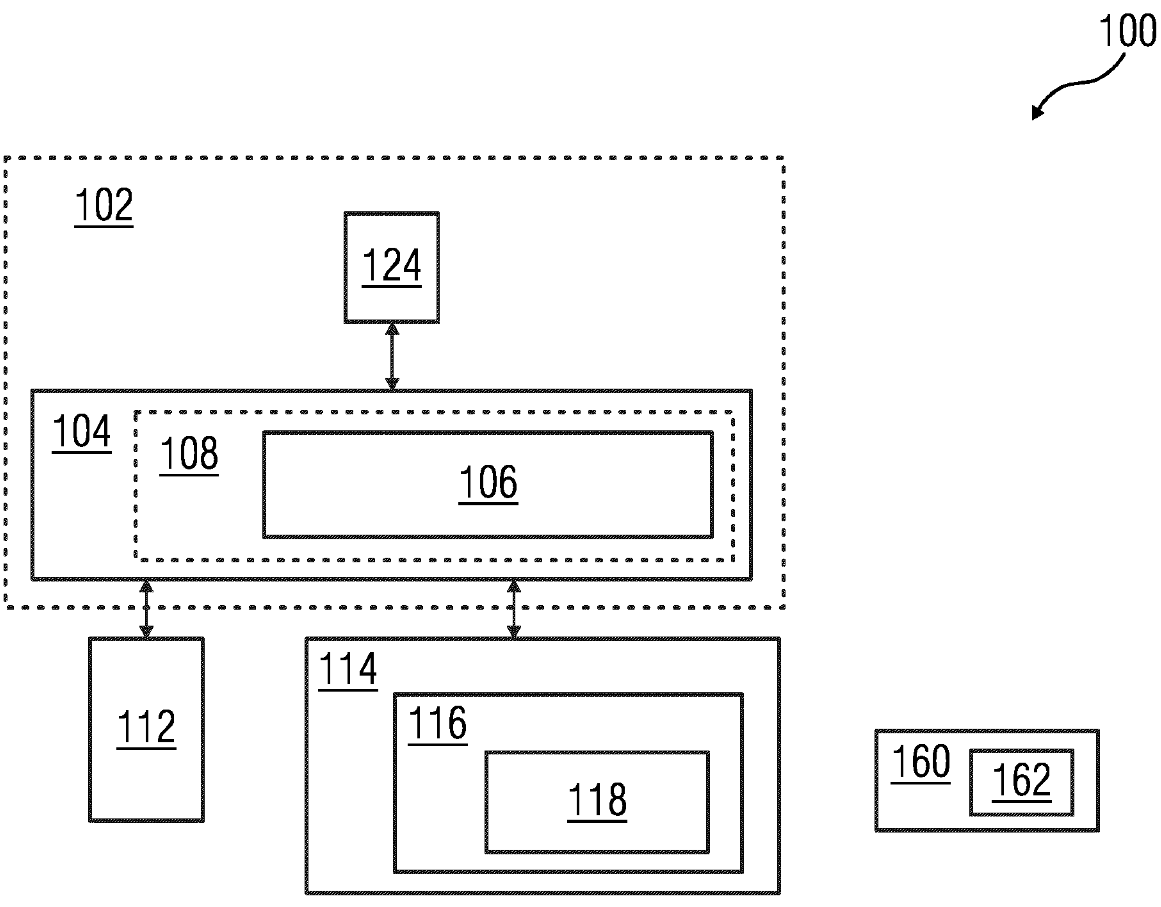

FIG 2A

200

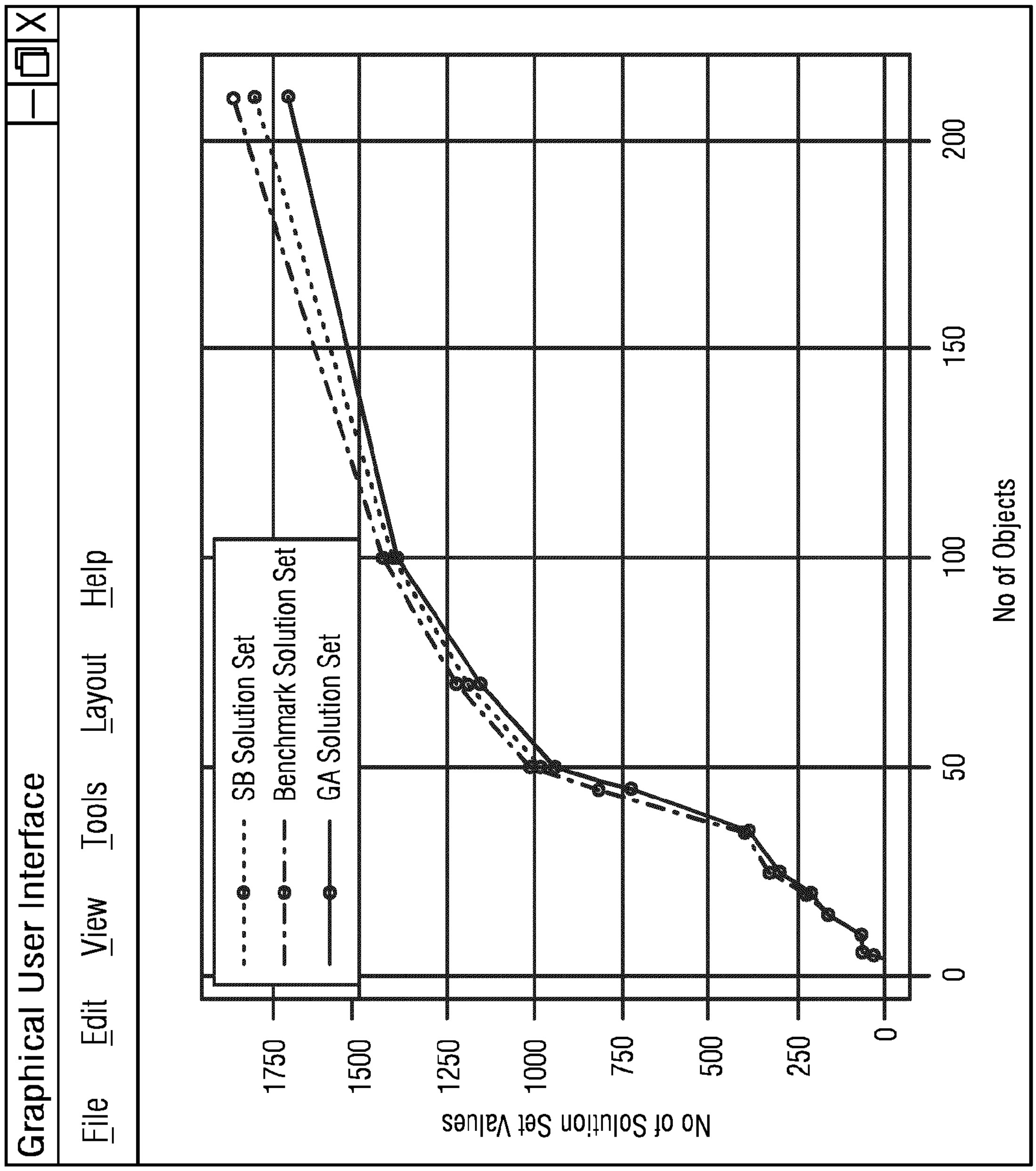

Graphical User Interface
File
Edit
View
Tools
Layout
Help
SB Solution Set
Benchmark Solution Set
GA Solution Set
No of Solution Set Values
No of Objects
0
250
500
750
1000
1250
1500
1750
0
50
100
150
200

FIG 2B

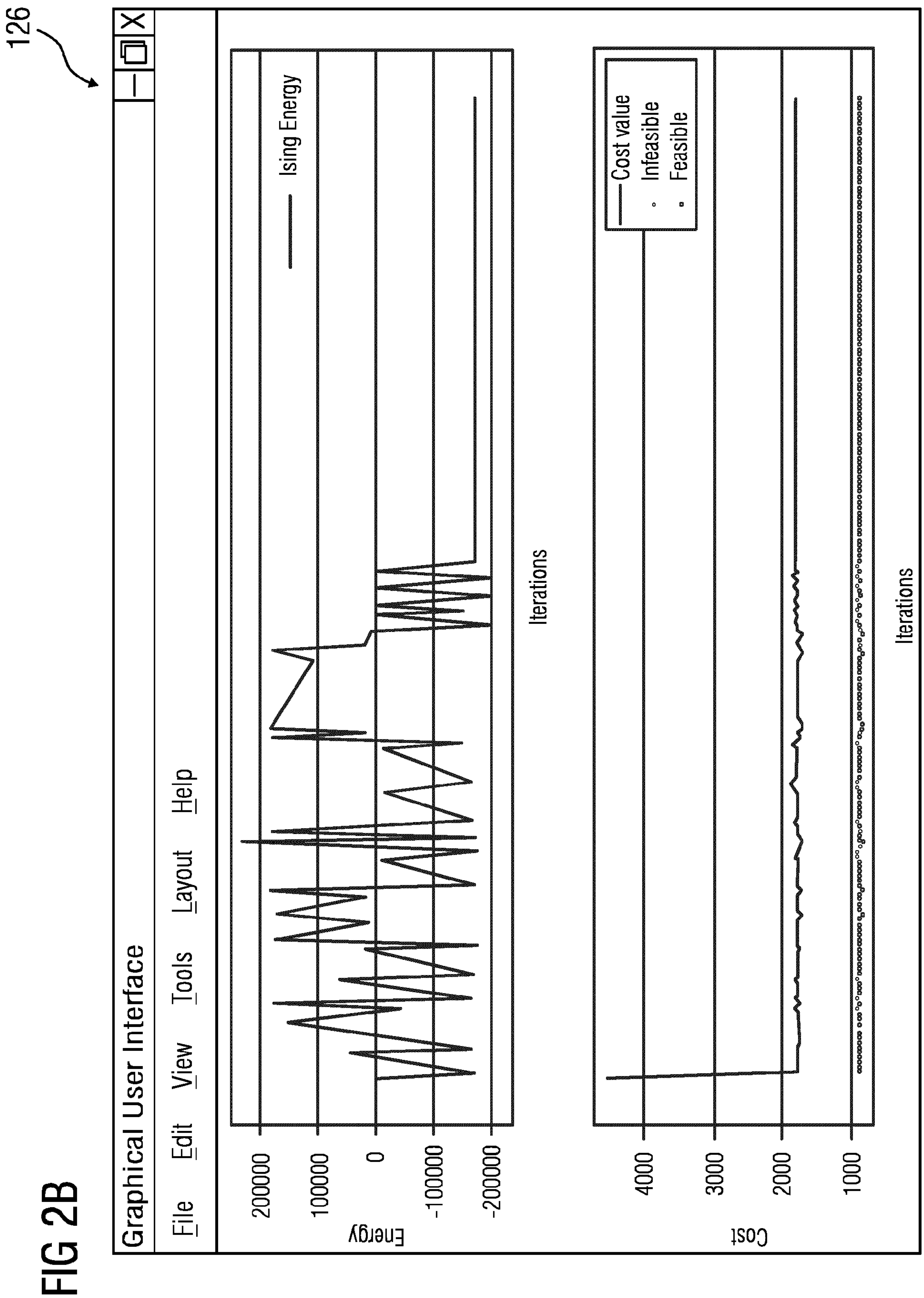
126
Graphical User Interface
File
Edit
View
Tools
Layout
Help
Energy
200000
100000
0
-100000
-200000
Ising Energy
Iterations
Cost
4000
3000
2000
1000
Cost value
Infeasible
Feasible
Iterations

FIG 3

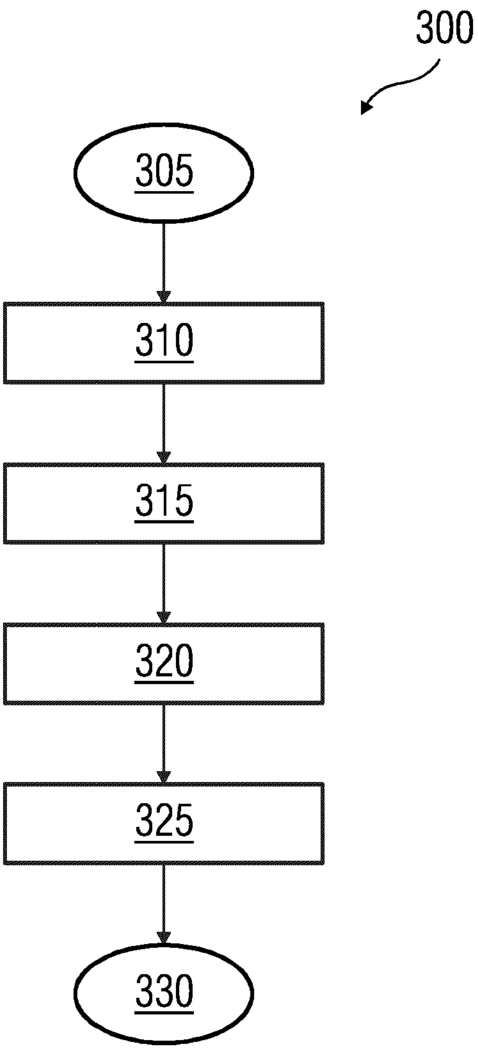

FIG 4

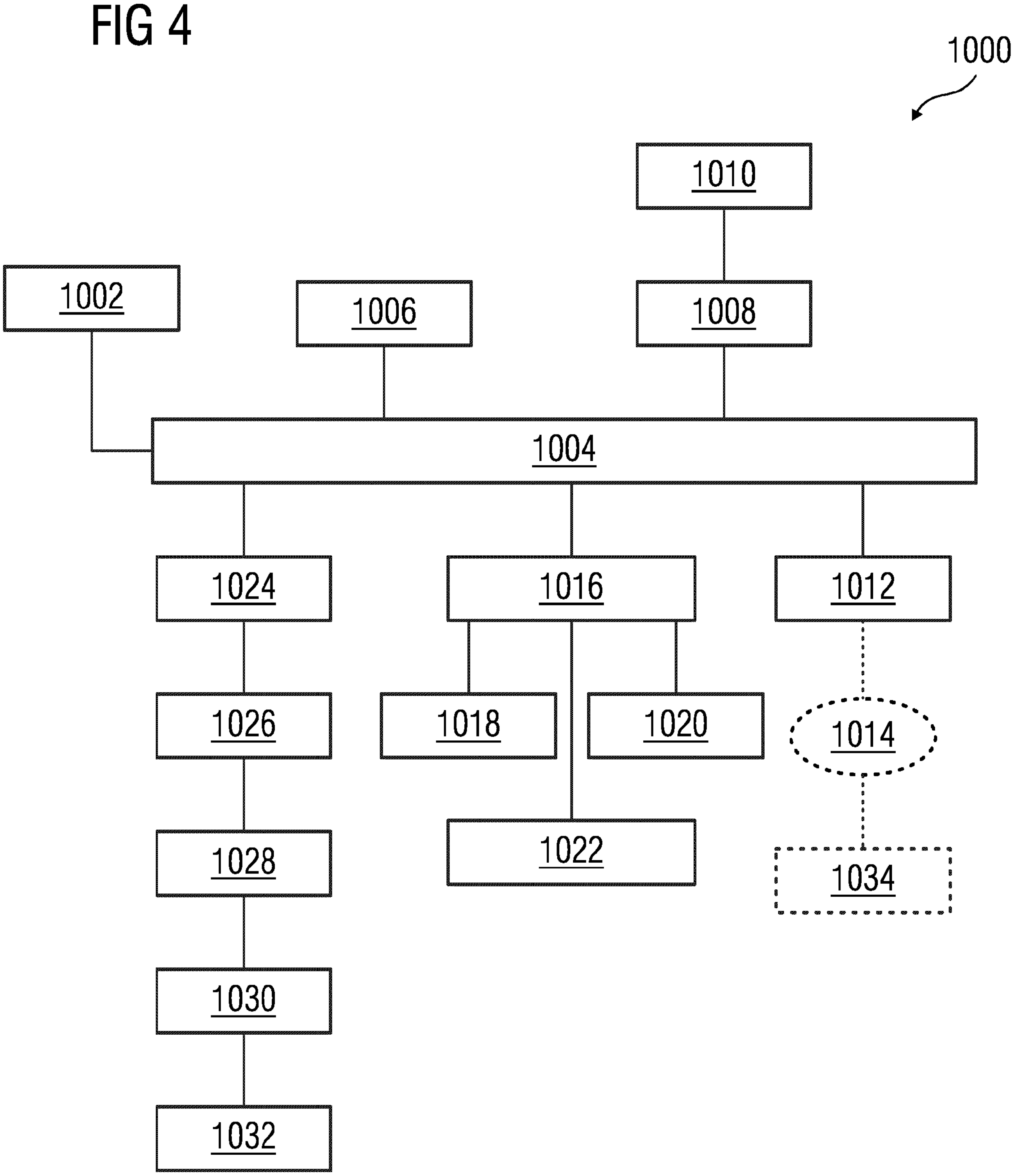
1000
1010
1002
1006
1008
1004
1024
1016
1012
1026
1018
1020
1014
1028
1022
1034
1030
1032

Europäisches Patentamt
European Patent Office
Office européen des brevets

# EUROPEAN SEARCH REPORT

Application Number
EP 24 20 3670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/401650 A1 (CHEN WEI-PENG [US] ET AL) 24 December 2020 (2020-12-24)<br>* paragraph [0004] - paragraph [0157]; figures 2, 3, 4A, 4B, 9 *<br>----- | 1-8 | INV.<br>G06F30/00<br>G06F17/11<br>G06F30/17<br>G06F30/20<br>G06N5/01 |
| A | WANG XIAOJUN ET AL: "Mapping structural topology optimization problems to quantum annealing",<br>STRUCTURAL AND MULTIDISCIPLINARY OPTIMIZATION, SPRINGER BERLIN HEIDELBERG, BERLIN/HEIDELBERG, [Online]<br>vol. 67, no. 5, 11 May 2024 (2024-05-11), XP037956019,<br>ISSN: 1615-147X, DOI: 10.1007/S00158-024-03791-1<br>[retrieved on 2024-05-11]<br>* Abstract; pages 7-14, section 3 *<br>----- | 1-8 | |
| A | OKADA AKIHISA ET AL: "Design Optimization of Noise Filter Using Quantum Annealer",<br>IEEE ACCESS, [Online]<br>vol. 11, 1 May 2023 (2023-05-01), pages 44343-44349, XP093242715,<br>USA<br>ISSN: 2169-3536, DOI: 10.1109/ACCESS.2023.3271969<br>Retrieved from the Internet:<br>URL:https://ieeexplore.ieee.org/iel7/6287639/10005208/10113307.pdf><br>[retrieved on 2025-01-23]<br>* Abstract; pages 44344-44347, section II *<br>----- | 1-8 | TECHNICAL FIELDS SEARCHED (IPC)<br>G06F<br>G06N |

The present search report has been drawn up for all claims

| Place of search | Date of completion of the search | Examiner |
|---|---|---|
| Munich | 28 January 2025 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 20 3670

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | Publication date | Patent family member(s) | Publication date |
|---|---|---|---|
| US 2020401650 A1 | 24-12-2020 | CA 3079066 A1 | 20-12-2020 |
| | | CN 112116093 A | 22-12-2020 |
| | | EP 3754566 A1 | 23-12-2020 |
| | | JP 7505245 B2 | 25-06-2024 |
| | | JP 2021002331 A | 07-01-2021 |
| | | US 2020401650 A1 | 24-12-2020 |

EPO FORM P0459

For more details about this annex : see Official Journal of the European Patent Office, No. 12/82